# EUROPÄISCHE PATENTANMELDUNG

(11) **EP 0 949 055 A2**
(43) Veröffentlichungstag der Anmeldung: **13.10.1999**
(21) Anmeldenummer: 99108306.4
(22) Anmeldetag: 31.03.1999
(51) Int. Cl.: B29C 45/44, F21M 7/00

(54) **Fahrzeugscheinwerfer und Verfahren zur Herstellung eines Aufnahmeteils eines Fahrzeugscheinwerfers**

(30) Priorität: 06.04.1998 DE 19815297
(71) Anmelder: Hella KG Hueck & Co., 59552 Lippstadt (DE)
(72) Erfinder: Bals, Josef, 59558 Lippstadt (DE); Niedenzu, Thomas, 59302 Oelde (DE)

(57) **Zusammenfassung**

Die Erfindung bezieht sich auf einen Fahrzeugscheinwerfer im wesentlichen bestehend aus einem Aufnahmeteil zur Aufnahme eines Reflektors mit mindestens einer Lampe und einer gegenüber einer Längsachse des Aufnahmeteiles schräg anordbaren Abdeckscheibe, die in ein Klebebett des Aufnahmeteiles einsetzbar ist, das mindestens bereichsweise seitlich von zwei einander gegenüberliegenden Seitenwänden begrenzt wird, wobei die Seitenwände in Zwangsentformungsbereichen nicht in einer in Richtung der Längsachse liegenden Entformungsrichtung liegen und durch Längsschlitze in Teilstücke unterteilt sind.

Ferner betrifft die Erfindung ein Verfahren zur Herstellung eines Aufnahmeteiles eines Fahrzeugscheinwerfers mit einem Klebebett, das schräg zur in Längsrichtung des Aufnahmeteiles liegenden Entformungsrichtung angeordnet ist, in einer mehrteiligen Spritzgußform, wobei beim Entformen nicht in der Entformungsrichtung liegende Seitenwandbereiche des Klebebettes im plastischen Bereich in Entformungsrichtung zwangsentformt werden und anschließend in ihre vorgesehene Stellung zurückfedern.

## Beschreibung

Die Erfindung betrifft einen Fahrzeugscheinwerter im wesentlichen bestehend aus einem Aufnahmeteil zur Aufnahme eines Reflektors mit mindestens einer Lampe und einer gegenüber einer Längsachse des Aufnahmeteiles schräg anordbaren Abdeckscheibe, die in ein Klebebett des Aufnahmeteiles einsetzbar ist, das mindestens bereichsweise seitlich von zwei einander gegenüberliegenden Seitenwänden begrenzt wird.

Die Erfindung betrifft weiterhin ein Verfahren zur Herstellung eines Aufnahmeteiles eines Fahrzeugscheinwerfers mit einem Klebebett, das schräg zur in Längsrichtung des Aufnahmeteiles liegenden Entformungsrichtung angeordnet ist, in einer mehrteiligen Spritzgußform.

Aus der EP 0 718 545 A 1 ist ein Fahrzeugscheinwerfer bekannt, der ein Aufnahmeteil zur Aufnahme eines Reflektors mit einer Lampe aufweist. Das Aufnahmeteil weist an seinem dem Reflektor abgewandten Ende ein Klebebett auf, in das eine Abdeckscheibe einsetzbar ist. Das Klebebett bzw. die Abdeckscheibe ist gegenüber einer Längsachse des Aufnahmeteiles schräg angeordnet. Das Klebebett wird von zwei seitlichen einander gegenüberliegenden Seitenwänden begrenzt.

Nachteilig dabei ist, daß zur Herstellung des Aufnahmeteiles in einer Spritzgußform die Seitenwände des Klebebettes sich in der Entformungsrichtung befinden müssen die etwa parallel zur Längsachse angeordnet ist. Dies führt dazu, daß das Klebebett entweder nur relativ großvolumig gestaltet werden kann und der Scheinwerfer aufgrund von vorgegebenen Platzverhältnissen nicht in die Karosserie zu integrieren ist, oder daß das Aufnahmeteil nur mit komplizierten und teueren Spritzgußwerkzeugen herstellbar ist.

Aufgabe der vorliegenden Erfindung ist es daher, die bekannten Scheinwerfer so zu verbessern, daß das Klebebett mit geringem Volumen und kostengünstig herstellbar ist.

Die Aufgabe wird erfindungsgemäß dadurch gelöst, daß die Seitenwände in Zwangsentformungsbereichen nicht in einer in Richtung der Längsachse liegenden Entformungsrichtung liegen und durch Längsschlitze in Teilstücke unterteilt sind.

Dadurch, daß die Seitenwämde in Teilstücke unterteilt sind, weisen die Seitenwände in den Zwangsentformungsbereichen eine Elastizität auf, die eine Zwangsentformung in der normalen Entformungsrichtung ermöglicht. Das Aufnahmeteil kann somit mit einem relativ einfachen und preisgünstigen Spritzgußwerkzeug hergestellt werden. Durch die Zwangsentformung ist es zudem möglich, das Klebebett kleinvolumig zu gestalten.

Nach einer bevorzugten Ausführungsform der Erfindung weisen die Längsschlitze partiell eine Grathaut auf. Dadurch wird vorteilhaft verhindert, daß Klebstoff aus dem Klebebett seitlich austreten kann.

Weitere Aufgabe der vorliegenden Erfindung ist es, ein Verfahren zur Herstellung eines erfindungsgemäßen Aufnahmeteiles zu finden.

Die Aufgabe wird erfindungsgemäß dadurch gelöst, daß beim Entformen nicht in der Entformungsrichtung liegende Seitenwandbereiche des Klebebettes im plastischen Bereich in Entformungsrichtung zwangsentformt werden und anschließend in ihre vorgesehene Stellung zurückfedern.

Dadurch, daß nicht in der Entformungsrichtung liegende Seitenwandbereiche des Klebebettes zwangsentformt werden, kann ein komplizierter Aufbau der Spritzgußform mit aufwendigen und teuren Schiebern vermieden werden.

Weitere Einzelheiten der Erfindung ergeben sich aus der nachfolgenden ausführlichen Beschreibung und den beigefügten Zeichnungen, in denen bevorzugte Ausführungsformen der Erfindung beispielsweise veranschaulicht sind.

In den Zeichnungen zeigen:

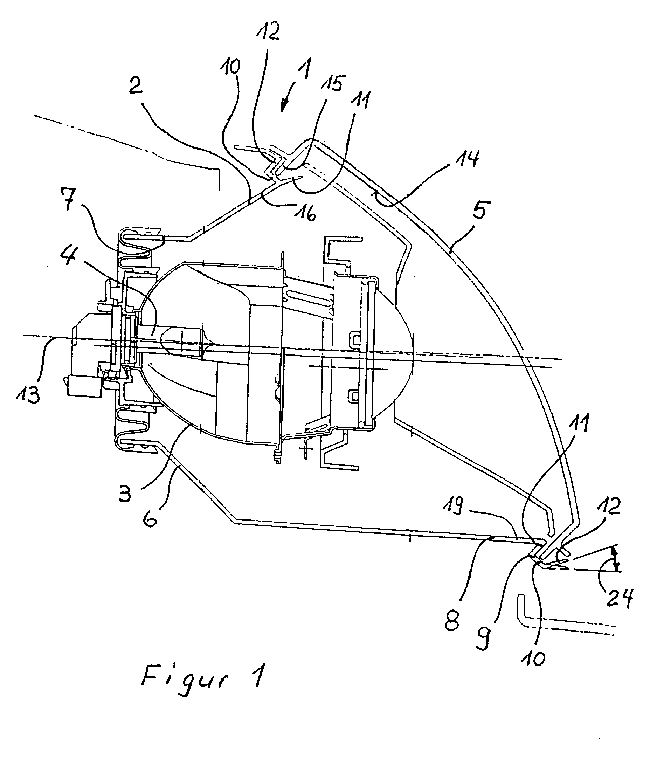

- Figur 1:: eine Seitenansicht eines Kraftfahrzeugscheinwerfers im Schnitt,

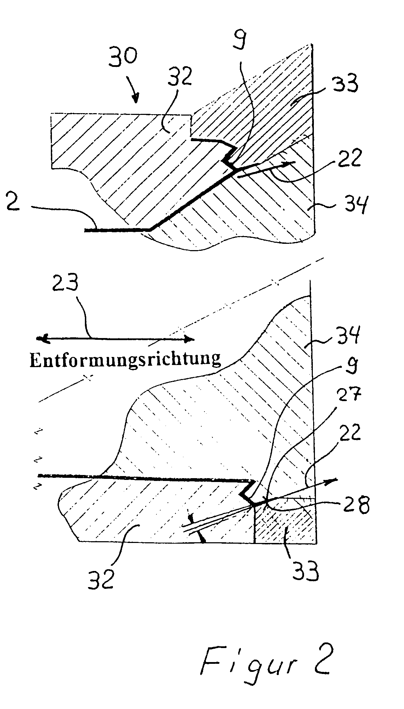

- Figur 2:: eine Seitenansicht des Aufnahmeteiles von Figur 1 in einer Spritzgußform im Schnitt und Ausriß,

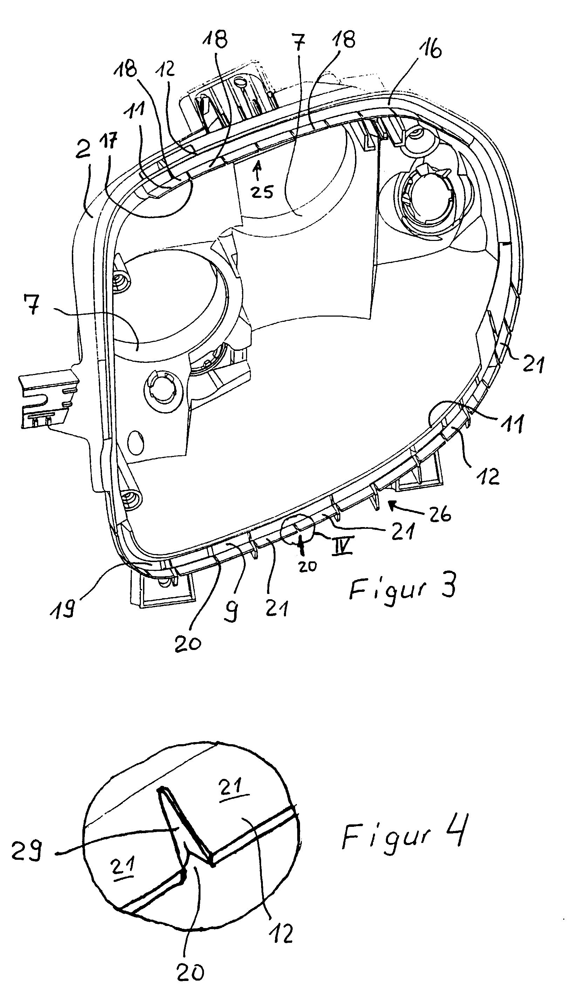

- Figur 3:: eine Vorderansicht des Aufnahmeteiles von Figur 1 in räumlicher Darstellung und
- Figur 4:: Einzelheit IV von Figur 3 in vergrößerter Darstellung.

Ein (Kraft-) Fahrzeugscheinwerfer (1) besteht im wesentlichen aus einem Aufnahmeteil (2) zur Aufnahme eines Reflektors (3) mit zwei Lampen (4) und einer Abdeckscheibe (5).

Das Aufnahmeteil (2) weist an seinem der Abdeckscheibe (5) abgewandten rückwärtigen Ende (6) zwei angeformte Tuben (7) auf. In die Tuben (7) sind vom rückwärtigen Ende her die Lampen (4) in den Reflektor (3) einsetzbar.

An seinem dem rückwärtigen Ende abgewandten vorderen Ende (8) weist das Aufnahmeteil (2) ein Klebebett (9) auf. Das Klebebett (9) weist einen der Abdeckscheibe (5) abgewandten Boden (10) auf, der von zwei Seitenwandungen (11, 12) begrenzt wird.

Das Aufnahmeteil (2) weist eine Längsachse (13) auf, zu der die Abdeckscheibe (5) und das Klebebett (9) schräg angeordnet sind. Der Tubus (7) ist koaxial zur Längsachse (13) angeordnet. Die Abdeckscheibe (5) weist auf ihrer dem Aufnahmeteil (2) zugewandten Rückseite einen umlaufenden Rand (15) auf, mit dem die Abdeckscheibe (5) in das Klebebett (9) einsetzbar ist.
Im in vertikaler Richtung oberen Bereich (16) des Aufnahmeteiles (2) weist die innere, der Längsachse (13) zugewandte Seitenwandung (11) Längsschlitze (17) auf, die die innere Seitenwandung (11) in obere Teilstücke (18) unterteilen.

Im in vertikaler Richtung unteren Bereich (19) des Aufnahmeteiles (2) weist das Klebebett (9) an seiner äußeren der Längsachse (13) abgewandten Seitenwandung (12) Längsschlitze (20) auf, die die äußere Seitenwandung (12) in untere Teilstücke (21) unterteilen.

Die innere Seitenwandung (11) weist im Bereich der oberen Teilstücke (18) und die äußere Seitenwandung (12) weist im Bereich der unteren Teilstücke (21) Zwangsentformungsrichtungen (22) auf, die zu der in Richtung der Längsachse (13) verlaufenden Entformungsrichtung (23) einen Zwangsentformungswinkel (24) von ca. 20° bilden.

Die oberen Teilstücke (18) der inneren Seitenwandung (11) und die unteren Teilstücke (21) der äußeren Seitenwandung (12) liegen in der Zwangsentformungsrichtung (22) und bilden Zwangsentformungsbereiche (25, 26). In den Zwangsentformungsbereichen (25, 26) weisen die Seitenwände (11, 12) bzw. deren Teilstücke (18, 21) innere Entformungsschrägen (27) und äußere Entformungsschrägen (28) auf, deren Neigung in den Zwangsentformungsbereichen (25, 26) gegenüber in Entformungsrichtung (23) liegenden Bereichen etwa verdoppelt ist.

Die Teilstücke (18, 21) sind zumindest im plastischen Zustand aus ihrer Zwangsentformungsrichtung (22) parallel zur Längsachse (13) bzw. Entformungsrichtung (23) abwinkelbar und rückfedernd ausgebildet. Die Längsschlitze (17, 20) sind in einem Abstand von 15 mm bis 30 mm angeordnet. Die Längsschlitze (17, 20) weisen partiell eine Grathaut (29) auf.

Das Aufnahmeteil (2) wird in einer mehrteiligen Spritzgußform (30) hergestellt. Die Spritzgußform (30) weist eine Außenform auf, die aus einem dem ruckwärtigen Ende (6) zugewandten hinteren Außenteil (32) und aus einem der Abdeckscheibe (5) zugewandten vorderen Außenteil (33) besteht. Nach innen zur Längsachse (13) hin weist die Spritzgußform (30) einen Kern (34) auf. Um das Aufnahmeteil (2) aus der Spritzgußform (30) zu entfernen, werden der Kern (34) und das vordere Außenteil (33) in Entformungsrichtung (23) von dem hinteren Außenteil (32) abgezogen. Dabei werden die oberen Teilstücke (18) von dem vorderen Außenteil (33) und die unteren Teilstücke (21) von dem Kern (34) aus der Zwangsentformungsrichtung (22) in die Enformungsrichtung (23) ausgelenkt und federn nach Entfernen des vorderen Außenteiles (33) bzw. des Kernes (34) wieder in ihre Ausgangslage zurück.

Zur Montage der Abdeckscheibe (5) in dem Aufnahmeteil (2) wird in das Klebebett (9) in bekannter Weise Hotmelt-Kleber eingebracht und die Abdeckscheibe (5) mit ihren umlaufenden Rand (5) in das Klebebett (9) eingesetzt. Das Vorsehen der Grathaut (29) verhindert den Austritt des Holtmelt-Klebers aus dem Klebebett (9).

## Patentansprüche

1. Fahrzeugscheinwerfer im wesentlichen bestehend aus einem Aufnahmeteil zur Aufnahme eines Reflektors mit mindestens einer Lampe und einer gegenüber einer Längsachse des Aufnahmeteiles schräg anordbaren Abdeckscheibe, die in ein Klebebett des Aufnahmeteiles einsetzbar ist, das mindestens bereichsweise seitlich von zwei einander gegenüberliegenden Seitenwänden begrenzt wird, dadurch gekennzeichnet, daß die Seitenwände (11,12) in Zwangsentformungsbereichen (25,26) nicht in einer in Richtung der Längsachse (13) liegenden Entformungsrichtung (23) liegen und durch Längsschlitze (17,20) in Teilstücke (18,21) unterteilt sind.

2. Fahrzeugscheinwerfer nach Anspruch 1, dadurch gekennzeichnet, daß die Seitenwände (11,12) in den Zwangsentformungsbereichen (25,26) Entformungsschrägen (27, 28) mit gegenüber Normal-Entformungsbereichen erhöhter Neigung aufweisen.

3. Fahrzeugscheinwerfer nach Anspruch 2, dadurch gekennzeichnet, daß die Neigung der Entformungsschrägen (27,28) in den Zwangsentformungsbereichen (25, 26) verdoppelt ist.

4. Fahrzeugscheinwerfer nach einem der Ansprüche 1 bis 3, dadurch gekennzeichnet, daß die Längsschlitze (17, 20) partiell eine Grathaut (29) aufweisen.

5. Fahrzeugscheinwerfer nach einem der Ansprüche 1 bis 4, dadurch gekennzeichnet, daß das Aufnahmeteil (2) an seinem dem Klebebett (9) abgewandten rückwärtigen Ende (6) mindestens einen angeformten Tubus (7) aufweist.

6. Fahrzeugscheinwerfer nach einem der Ansprüche 1 bis 5, dadurch gekennzeichnet, daß die Teilstücke (18, 21) im plastischen Zustand parallel zur Längsachse (13) abwinkelbar und rückfedernd ausgebildet sind.

7. Fahrzeugscheinwerfer nach Anspruch 6, dadurch gekennzeichnet, daß die Teilstücke (18, 21) um einen Zwangsentformungswinkel von ca. 20° rückfedernd auslenkbar sind.

8. Fahrzeugscheinwerfer nach einem der Ansprüche 1 bis 7, dadurch gekennzeichnet, daß die Längsschlitze (17, 20) in einem Abstand von 15 bis 30 mm angeordnet sind.

9. Verfahren zur Herstellung eines Aufnahmeteiles eines Fahrzeugscheinwerfers mit einem Klebebett, das schräg zur in Längsrichtung des Aufnahmeteiles liegenden Entformungsrichtung angeordnet ist, in einer mehrteiligen Spritzgußform, dadurch gekennzeichnet, daß beim Entformen nicht in der Entformungsrichtung (23) liegende Seitenwandbereiche des Klebebettes (9) im plastischen Bereich in Entformungsrichtung (23) zwangsentformt werden und anschließend in ihre vorgesehene Stellung zurückfedern.
